# EUROPÄISCHE PATENTSCHRIFT

(11) **EP 4 114 679 B1**
(45) Veröffentlichungstag und Bekanntmachung des Hinweises auf die Patenterteilung: **11.10.2023**
(21) Anmeldenummer: 22716003.3
(22) Anmeldetag: 16.03.2022
(51) Int. Cl.: B60K 35/00

(54) **VERFAHREN UND VORRICHTUNG ZUR SICHEREN ANZEIGE VON ASIL-RELEVANTEN DATEN AUF EINER ANZEIGEVORRICHTUNG EINES KRAFTFAHRZEUGES**
METHOD AND DEVICE FOR THE SAFE DISPLAY OF ASIL-RELEVANT DATA ON A DISPLAY DEVICE OF A MOTOR VEHICLE
PROCÉDÉ ET DISPOSITIF POUR L'AFFICHAGE SÉCURISÉ DE DONNÉES PERTINENTES POUR L'ASIL SUR UN DISPOSITIF D'AFFICHAGE D'UN VÉHICULE AUTOMOBILE

(30) Priorität: 30.03.2021 DE 102021001673
(43) Veröffentlichungstag der Anmeldung: 11.01.2023
(73) Patentinhaber: Mercedes-Benz Group AG, 70372 Stuttgart (DE)
(72) Erfinder: AXMANN, Benjamin, 75328 Schömberg (DE); EWEN, Christoph, 70180 Stuttgart (DE); KREUZER, Markus, 73269 Hochdorf (DE); PROSS, Achim, 72202 Nagold (DE)
(74) Vertreter: Novagraaf Group
(86) Internationale Anmeldenummer: PCT/EP2022/056824
(87) Internationale Veröffentlichungsnummer: WO 2022/207323

(56) Entgegenhaltungen:
- DE-A1-102015 200 292
- DE-A1-102019 205 237

## Beschreibung

Die Erfindung betrifft ein Verfahren zur sicheren Anzeige von ASIL-relevanten Daten auf einer Anzeigevorrichtung eines Kraftfahrzeuges, bei welchem Anzeigen mit höheren Sicherheitseinstufungen gegenüber Anzeigen mit niedrigeren Sicherheitseinstufungen durch eine Anzeigeeinheit durch einen Bildverbesserungsvorgang weniger modifiziert dargestellt werden, sowie eine Vorrichtung zur Durchführung des Verfahrens.

Die DE 10 2019 205 237 A1 offenbart eine Anzeige einer ASIL-D-Information mittels eines weniger sicheren Gerätes. Dabei werden Daten mit unterschiedlichen Sicherheitseinstufungen (keine oder ASIL A, B, C, D) dahingehend unterschiedlich verarbeitet, dass Anzeigen höherer Einstufung gegenüber Anzeigen niedrigerer Einstufung durch eine Anzeigeeinheit weniger bzw. nicht modifiziert (Aufhellung, Farboptimierung u.ä.) dargestellt werden.

Die DE 10 2015 200 292 A1 beschreibt ein Verfahren zur sicheren Anzeige von ASiL-relevanten Daten auf einer Anzeigevorrichtung eines Kraftfahrzeugs. Sicherheitskritische und sicherheitsunkritische Daten werden dabei getrennt und unabhängig voneinander verarbeitet, um sicherheitsunkritische und sicherheitskritische Anzeigeelemente zu erzeugen. Dabei werden die sicherheitskritischen Anzeigeelemente in einem mittels des Anzeigegerätes angezeigten Zustand den sicherheitsunkritischen Anzeigeelementen grafisch überlagernd angezeigt werden. Dabei können die sicherheitskritischen Bilddaten und die sicherheitsunkritischen Bilddaten voneinander getrennt und zusätzlich oder alternativ voneinander unabhängig eingelesen werden. Ferner können die sicherheitskritischen Anzeigeelemente und die sicherheitsunkritischen Anzeigeelemente voneinander getrennt und zusätzlich oder alternativ voneinander unabhängig ausgegeben werden.

Die DE 10 2015 200292 A1 offenbart ein Verfahren zum Anzeigen einer ASIL-D-Information, bei dem ein ASIL-D-Gerät eine ASIL-D-Information erzeugt und ein von dem ASIL-D-Gerät verschiedenes und mit dem ASIL-D-Gerät verbundenes anzeigefähiges Gerät ohne Sicherheitsstufe oder mit einer Sicherheitsstufe geringer als ASIL D in einem Anzeigepufferspeicher des anzeigefähigen Geräts einen separaten Bereich für eine ASIL-D-Anzeigeebene bereitstellt. Das ASIL-D-Gerät überträgt die erzeugte ASIL-D-Information unmittelbar in den separaten Bereich des anzeigefähigen Geräts. Das anzeigefähige Gerät stellt dabei einen Anzeigeinhalt des separaten Bereichs, welcher die übertragene ASIL-D-Information umfasst, für ein mit dem anzeigefähigen Gerät verbundenes Anzeigemodul als die ASIL-D-Anzeigeebene bereit.

Aus der DE 10 2015 200292 A1 ist ein Verfahren zur Ansteuerung eines Anzeigegerätes bekannt, wobei auf dem Anzeigegerät sicherheitskritische Inhalte und sicherheitsunkritische Inhalte anzeigbar sind. Das Verfahren weist einen Schritt des Verarbeitens von eingelesenen Bilddaten auf. Dabei werden sicherheitskritische Bilddaten und sicherheitsunkritische Bilddaten voneinander getrennt und/oder voneinander unabhängig verarbeitet, um sicherheitskritische Anzeigeelemente und sicherheitsunkritische Anzeigeelemente zu erzeugen. Hierbei werden die sicherheitskritischen Anzeigeelemente so erzeugt, dass die sicherheitskritischen Anzeigeelemente in einem mittels des Anzeigegerätes angezeigten Zustand sicherheitsunkritische Anzeigeelemente grafisch überlagernd angezeigt werden.

Aufgabe der Erfindung ist es, ein Verfahren und eine Vorrichtung zur sicheren Anzeige von ASIL-relevanten Daten auf einer Anzeigevorrichtung eines Kraftfahrzeuges anzugeben, welche genauere und detailliertere Informationen bereitstellen, die einen Rückschluss auf den genauen Anzeigeinhalt eines darzustellenden Bildes ermöglichen.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Die Aufgabe ist mit dem eingangs erläuterten Verfahren dadurch gelöst, dass eine Information über die Sicherheitseinstufung eines anzuzeigenden Bildes durch eine binäre Codierung in einer Farbbitinformation mindestens eines Pixels des über eine Pixelmatrix anzuzeigenden Bildes in einem Datenstrom eingebracht wird, um eine Veränderung der sicherheitsrelevanten Anzeige des Bildes während dem Bildverbesserungsvorgang zu steuern, d.h. zu minimieren oder ganz zu unterbinden. Durch die binäre Codierung wird eine Information bereitgestellt, welche über die Farbinformation auf Pixelebene hinausgeht. Dadurch ist auch ein Rückschluss auf den Typ bzw. die Art eines jeweilig transferierten Pixels möglich, wodurch der genaue Anzeigeinhalt des Bildes zurückverfolgt werden kann. Diese Metadateninformationen auf Pixelebene werden zusätzlich den Bildinformationen auf Bit-Ebene hinzugefügt, ohne das Bildsignal in seinem Ursprung zu verfälschen. Die in Pixel aufgelösten Bilddaten werden entsprechend ihrer initialen Erstellung einem Nutzer angezeigt.

Vorteilhafterweise wird die binäre Codierung durch eine Bilddaten erzeugende Einheit der Farbbitinformation zugefügt, welche den Datenstrom der Farbbitinformation an eine Bilddaten ausgebende Einheit übersendet. In einer Renderingeinheit werden die Bilddaten gerendert und die klassifizierende binäre Codierung entsprechend einer Sicherheitseinstufung der Bilddaten eingebracht. Durch die Klassifizierung der Bilddaten bereits in der Renderingeinheit bei der Bilderstellung wird eine Falschbehandlung der Bilddaten durch eine Bilddatenausgebende Einheit und zugehörigem Bildverbesserer vermieden. Unter Bildverbesserer ist ein aus dem Stand der Technik bekanntes Softwaremodul oder eine Einrichtung mit einem Softwaremodul zu verstehen, die ein Bild vor einer Anzeige auf einer Anzeigevorrichtung mittels Bildverbesserungstechnologien optimiert, beispielsweise hinsichtlich Farbe, Kontrast, Helligkeit, Schärfe, Auflösung, Rauschen etc. Der Begriff Bild umfasst im Sinne vorliegender Offenbarung alle Arten von Anzeigen auf einer Anzeigevorrichtung, d.h. beispielsweise Symbole, Bilder, Texte oder Animationen.

In einer Ausgestaltung wird aus dem von der Bilddaten erzeugenden und ausgebenden Einheit empfangenen Datenstrom das mindestens eine die klassifizierend binäre Codierung umfassende Pixel vor einer Übermittlung des anzuzeigenden Bildes an eine Anzeigeeinheit ausgelesen, wobei in Abhängigkeit der klassifizierenden binären Codierung des mindestens einen Pixels eine Entscheidung über eine Art der Ausführung einer Bildverbesserung vor Übermittlung an die Anzeigeeinheit getroffen und dementsprechend umgesetzt wird. Die Trennung der Informationen über die Bilddaten und der binären Codierung erlaubt eine genaue Auswertung der binären Codierung, woraus die Sicherheitseinstufung des anzuzeigenden Bildes genau identifiziert werden kann, bevor das Bild zur Anzeige kommt.

In einer Variante wird die ausgelesene klassifizierende binäre Codierung des mindestens einen Pixels durch das ursprünglich vor der binären Codierung in dem Pixel gespeicherten Farbwert-Bit ersetzt, wobei das anzuzeigende Bild entsprechend zugehöriger klassifizierenden binärer Codierung im Bildverbesserungsvorgang modifiziert wird. Nachdem der Bildverbesserer nach Auslesen der klassifizierenden binären Codierung eine Anweisung erhalten hat, wie der Bildverbesserungsvorgang auszuführen ist, wird vor der Ausführung des Bildverbesserungsvorganges die klassifizierende binäre Codierung durch das ursprüngliche, vor Einbringen der binären Codierung in dem Pixel gespeicherte Farbwert-Bit ersetzt. In vorteilhafter Weise entspricht der Farbwert des dem Bildverbesserer zugeführten Bildes exakt dem Farbwert des Bildes vor Einbringung der klassifizierenden binären Codierung. Ohne Qualitätsverlust erfüllen die als sicherheitsrelevant "ASIL" eingestuften Farbpixel die Anforderungen hinsichtlich der festgelegten Sicherheitseinstufungen, die als unkritisch klassifizierten Pixel können im vollem Umfang im Bildverbesserungsvorgang optimiert werden.

In einer Ausführungsform werden die nach dem Bildverbesserungsvorgang ausgegebenen Farbwert-Bits des anzuzeigenden Bildes dahingehend geprüft, ob das auszugebende Bild entsprechend der durch die zugehörige binäre Codierung vorgegebene Sicherheitseinstufungen ausgegeben wird. Hierzu wird das von der Renderingeinheit vor Einbringung der binären Codierung erzeugte Bild mit dem anzuzeigenden Bild verglichen. Insbesondere kann durch den Vergleich für Bilder mit hoher ASIL-Einstufung, d.h. für Bilder bei denen die Bilder vor Einbringung der binären Codierung und die durch die Empfangseinheit an die Anzeigeeinheit gesendeten Bildern übereinstimmen müssen, ein Fehler oder eine Abweichung zuverlässig erkannt und gegebenenfalls eine Sicherheitsmeldung ausgegeben oder eine Abhilfemaßnahme eingeleitet werden. Dadurch wird eine Redundanz geschaffen, durch welche die Sicherheitseinstufung des anzuzeigenden Bildes noch einmal überprüft wird.

In einer weiteren Ausgestaltung wird für die binäre Codierung in einer vorgegebenen Farbe der RGB-Informationen ein Bit reserviert. Dadurch ergeben sich zwei Klassifizierungszustände.

In einer Alternative wird für die binäre Codierung ein Pixel jeder Farbe der RGB-Information reserviert. Dadurch wird die Zahl der Klassifizierungszustände erhöht.

Eine weitere Vergrößerung der Anzahl der Klassifizierungszustände wird ermöglicht, wenn für die binäre Codierung mit jedem neuen Datenframe ein Bit abwechselnd in der Bitinformation der Farben RGB reserviert wird. Des Weiteren wird von der die Bilddaten ausgebende Einheit ein Bild-Freeze erkannt, sobald das Klassifizierungsbit nicht zwischen den Bit-informationen der Farbwerte wechselt.

Alternativ werden für die binäre Codierung zusätzliche LSB-Informationen im Einzelbild mit einer vorgegebenen Farbtiefe bereitgestellt. Dies ermöglicht die Hinzufügung beliebig vieler Pixel pro Farbe, was eine hohe Klassifizierungsvielfalt ermöglicht.

In einer weiteren Ausgestaltung wird ein ergänzender Kanal einer Farbkodierung, d.h. beispielsweise eines oder mehrere der für Transparenz vorgesehenen Bits einer RGBA-Farbkodierung oder der für Farbe Weißanteil vorgesehenen Bits einer RGBW Codierung, für eine ASIL-klassifizierende binäre Codierung als Metainformation verwendet. Der ergänzende Kanal umfasst mehrere Bits oder ein Byte. Der jeweils eine Farbkodierung ergänzende A-Kanal (Alpha) sowie der W-Kanal ergänzt prinzipiell die drei Farbbytes für R, G und B um ein jeweils viertes Byte, in die die klassifizierende binäre Codierung eingebracht wird. Die RGB-Daten werden für eine Reduzierung des Datenvolumens zur Übermittlung in einem Datenkanal von einer beispielsweise als Rendering-Einheit ausgebildeten Sendeeinheit zu einer bildbearbeitenden und bildausgebenden Empfangseinheit in einem komprimierten Format übermittelt. In vorteilhafter Weise erfolgt für den ergänzenden Kanal, d.h. auch für die Bytes des A- oder W-Kanal keine Komprimierung, so dass eine Ausgabe einer falschen klassifizierenden binären Codierung durch Komprimierung- oder Dekomprimierungsfehlern ausgeschlossen ist.

Ein weiterer Aspekt der Erfindung betrifft eine Vorrichtung zur sicheren Anzeige von ASIL-relevanten Daten auf einer Anzeigevorrichtung eines Kraftfahrzeuges, umfassend eine Bilddaten erzeugende Einheit und eine Bilddaten ausgebende Einheit, die über einen Datenstrom kommunizieren, wobei die Bilddaten ausgebende Einheit mit einer Anzeigeeinheit verbunden ist. Die Bilddaten erzeugende Einheit bringt eine Zusatzinformation über eine Sicherheitseinstufung der anzuzeigenden Bilddaten durch eine klassifizierende binäre Codierung in einer Farbbitinformation mindestens eines Pixels der Bilddaten in den Datenstrom ein und klassifiziert diese damit hinsichtlich der Sicherheitseinstufungen, um eine Veränderung der sicherheitsrelevanten Anzeige von Bildern während eines Bildverbesserungsvorganges in der Bilddaten ausgebenden Einheit dahingehend zu steuern, dass Bildverbesserungsvorgänge minimiert oder ganz zu unterbunden werden.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: eine Prinzipdarstellung der erfindungsgemäßen Vorrichtung,
- Fig. 2: ein Ausführungsbeispiel des erfindungsgemäßen Verfahrens mit der Vorrichtung gemäß Fig. 1 mit einem zweistufigen Funktionssicherheitsprozess in der Empfangseinheit,
- Fig. 3: ein Ausführungsbeispiel eines Ablaufplans in der Empfängereinheit,
- Fig. 4: ein Ausführungsbeispiel zur Bearbeitung von ASIL-klassifizierenden Pixeln in der Empfängereinheit,
- Fig. 5: ein Ausführungsbeispiel zur Bearbeitung von nicht ASIL-klassifizierenden Pixeln in der Empfängereinheit, und
- Fig. 6: ein Ausführungsbeispiel einer Einbringung eines klassifizierenden Bits und nachfolgendes Ersetzen durch ein Bit der Originalbilddaten.

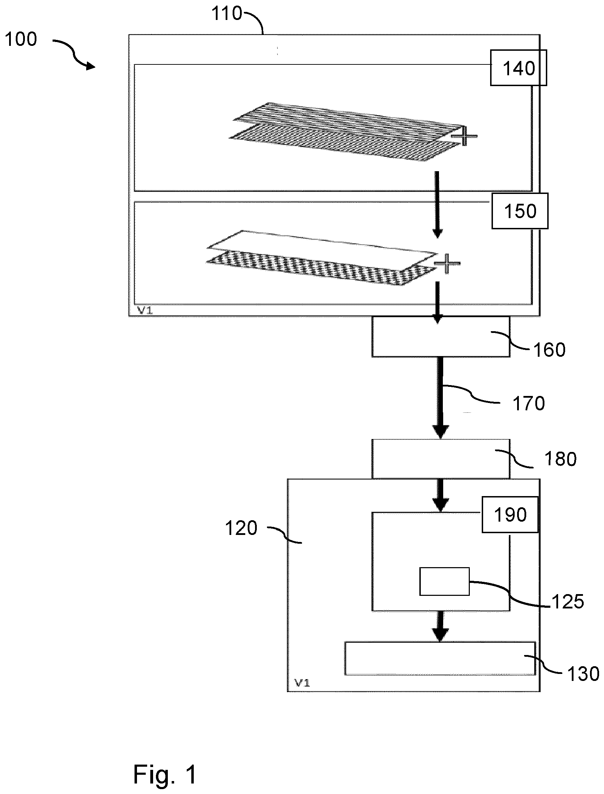

In Fig. 1 ist eine Prinzipdarstellung der erfindungsgemäßen Vorrichtung dargestellt. Die Vorrichtung 100 besteht aus einer Sendeeinheit 110 und einer Empfängereinheit 120, die beide Bilddaten verarbeiten, die in einer Anzeigeeinheit 130, die Bestandteil der Empfangseinheit 120 ist, zur Anzeige gebracht werden. Die Sendeeinheit 110, die eine Rendering-Einheit zur Erzeugung eines Bildes aus Rohdaten darstellt, umfasst eine erste Ebene 140, in welcher unkritisch klassifizierte Pixelebenen in ein Bild eingebracht werden. In einer zweiten Ebene 150, die als abgesicherte Einheit ausgebildet ist, werden sicherheitskritisch klassifizierte Bildelemente in das Bild eingebracht. Die Kritikalität der Pixelebenen zur Erzeugung der Bilder hängt beispielsweise davon ab, ob die Bilder Anzeigen für ASIL relevante System wie ein System für automatisiertes Fahren oder für nicht abgesicherte Systeme wie ein Entertainmentsystem wiedergeben. Der vollständig seitens der Sendeeinheit 110 gerenderte und auf Pixelebene klassifizierte Bildinhalt wird in einem Serialisierer 160 zu einem komprimierten Datenstrom ausgebildet, der über eine Videoübertragungsstrecke 170 zu der Empfangseinheit 120 übertragen wird und in dieser mittels eines Deserialisierers 180 wieder dekomprimiert und in Bildinformationen umgesetzt wird. Die Empfangseinheit 120 nimmt die übermittelten Bildinformation mittels eines Controllers 190 entgegen. Je nachdem, ob die Pixel der Bildinformation sicherheitskritisch (ASIL-relevant) oder unkritisch sind, was durch ein eine Klassifizierung in Sicherheitseinstufungen ermöglichendes Pixel-Content-Mapping bestimmt wird, wird das anzuzeigenden Bild in einem Bildverbesserer (125), d.h. in einem Bildverbesserungsvorgang moduliert oder nicht und der Anzeigeeinheit 130 des Empfängereinheit 120 zugeführt.

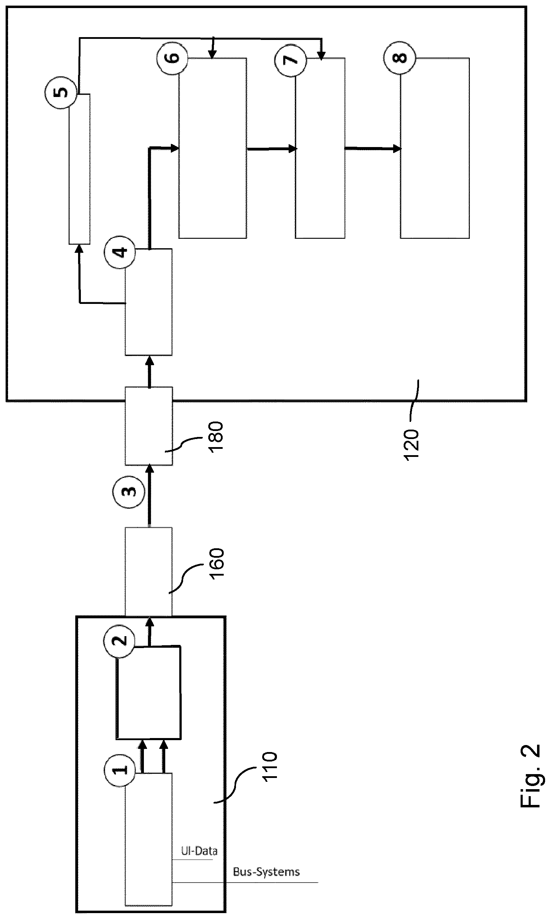

Fig. 2 zeigt ein Ausführungsbeispiel des erfindungsgemäßen Verfahrens mit der Vorrichtung 100 gemäß Fig. 1 mit einem zweistufigen Funktionssicherheitsprozess in der Empfangseinheit 120. In der Funktion 1 werden in der Sendeeinheit 110 visualisierungsrelevante interne und externe Informationen, vorzugsweise Fahrzeuginformationen, gesammelt. Die visualisierungsrelevanten Parameter werden mit den Bildinformationen, in diesem Fall einem Pixel-Farb-Inhalt, für die Bildsynthese verbunden. Anschließend werden in der Funktion 2 die Bildinformationen mit Metadaten, die eine Sicherheitseinstufung der Bildinformation klassifizierende binäre Codierung umfassen, zur pixelgenauen Typisierung zu einer Bildinformation zusammengeführt, d.h. gerendert. Nach der Übertragung der gerenderten Bildinformation von der Sendeeinheit 110 zu der Empfangseinheit 120 (Funktion 3) erfolgt in Funktion 4 eine pixelweise Auftrennung des Datenstromes des anzuzeigenden Bildes in eine Darstellungsinformation (Farbe und Position) und in Metadaten (Klassifizierung und Position). Die Metadaten liefern dabei eine pixelgenaue Aussage über ASIL-relevante Klassifikationen in Sicherheitseinstufungen, während die Darstellungsinformation die Pixelfarbe bestimmt. In einer ersten Funktionssicherheitsstufe 5 erfolgt eine Prüfung der Einstufungsklassifizierung jedes Pixels. In Erwiderung auf erkannte ASIL relevante Metadaten erfolgt an das System eine entsprechende Rückmeldung mit Vorschriften für den Bildverbesserungsprozess und den Anzeigeprozess gemäß vordefinierter Parameter, die z. B. in einer Lookup-Tabelle abgeleitet werden. Diese Vorschriften werden dem Bildverbesserungsprozess und der Anzeigeeinheit 130 zugeführt. In Abhängigkeit von diesen Vorschriften und den Ergebnissen der Funktionssicherheitsstufe 5 bearbeitet in der Funktion 6 der Bildverbesserungsprozess jedes Pixel nach geltenden Vorschriften in Abhängigkeit von der Pixelklassifizierung. Gemäß Funktion 7 wird überprüft, ob die geltenden Vorschriften der pixelbasierten Modifizierung bzw. Optimierung für die vorgesehene Anzeige eingehalten wurden. Dabei erfolgt ein pixelweiser Vergleich der bei der Empfängereinheit eingegangenen Werte mit den an die Anzeigeeinheit auszugebenden Werten, beispielsweise mit einem Hashwert-Algorithmus. Stimmen die Werte überein, erfolgt in Funktion 8 eine Übergabe der Bildinformationen in die Treiber für die Visualisierung in der Anzeigeeinheit.

Wie beschrieben, wird für jedes Einzelbild, das zwischen der Sendeeinheit 110 und der Empfangseinheit 120 auf der Videoübertragungsstrecke 170 übertragen wird, den Pixeln des Bildes seitens der Sendeeinheit 110 eine Information zugefügt, um welchen Typ eines Pixels es sich handelt. Dies erfolgt durch ein RGB-Pixel - Klassifizierungs-Mapping. Die Klassifizierung auf RGB-Pixelebene ist abhängig von der bereitgestellten Anzahl von Bits und wird in den jeweiligen LSB-Daten (Least Significant Bit-Daten) der RGB-Matrix vorgenommen. Die Klassifizierungsmöglichkeiten sollen anhand eines 8 Bit RGB-Pixels dargestellt werden:

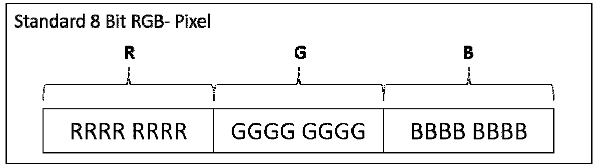

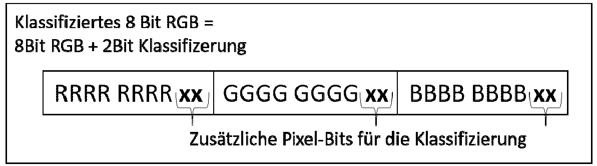

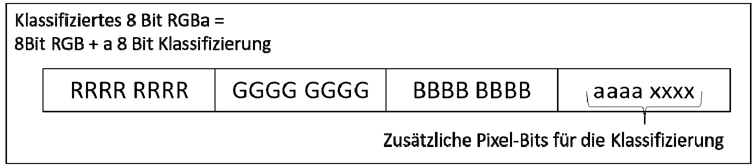

Im Folgenden sollen beispielhaft einige mögliche Ausprägungen des Pixelformatierungsschemas auf RGB-Basis erläutert werden.
1. Reservierung von einem LSB-Pixel in der Farbe Blau B, wodurch sich zwei Klassifizierungszustände ergeben

   R=8, G = 8, B = 8 → R = 8 , G = 8 , B = 7 + **x**

   RRRRRRRR GGGGGGGG BBBBBBBB --> RRRRRRRR GGGGGGGG BBBBBBBx
2. Reservierung von 1-Bit pro Farbe, wodurch sich 8 Klassifizierungszustände ergeben

   R = 8, G = 8, B = 8 → R = 7 + **x** , G = 7 + **x** , B = 7 + **x**

   RRRRRRRR GGGGGGGG BBBBBBBB --> RRRRRRR**x** GGGGGGG**x** BBBBBBB**x**
3. Reservierung von 1-Bit einer Farbe pro Datenframe, wodurch sich 8 Klassifizierungszustände über drei Datenframes ergeben. Dabei handelt es sich um eine Frame-basierte iterative Pixelklassifizierung ohne signifikante Bildverluste. Mit jedem Frame wechselt das Klassifizierungsbit zwischen den Bitcodierungen der Farben Rot, Grün und Blau.
   Datenframe 1

      R = 8, G = 8, B = 8 --> R = 7 + x, G = 8, B = 8

      RRRRRRRR GGGGGGGG BBBBBBBB --> RRRRRRRx GGGGGGGG BBBBBBBB
   Datenframe 2:

      R = 8, G = 8, B = 8 --> R = 8, G = 7 + x, B = 8

      RRRRRRRR GGGGGGGG BBBBBBBB --> RRRRRRRR GGGGGGGx BBBBBBBB
   Datenframe 3:

      R = 8, G = 8, B = 8 --> R = 8, G = 8, B = 7 + x

      RRRRRRRR GGGGGGGG BBBBBBBB --> RRRRRRRR GGGGGGGG BBBBBBBx
4. Zusätzliche Bereitstellung von LSB-Informationen im Einzelbild mit 10-Bit Farbtiefe, wodurch sich Klassifizierungszustände 1 bis N ergeben

   R = 10, G = 10, B = 10 → R = 10-n + n*x , G = 10-n + n***x**, B = 10-n + n***x**; für n=3

   RRRRRRRRRR GGGGGGGGGG BBBBBBBBBB --> RRRRRRRRxxx GGGGGGGGxxx BBBBBBBBxxx
5. Zusätzliche Bereitstellung von Metainformationen durch die Kodierung in einem zusätzlichen Kanal (Alpha und White)

   R=8, G = 8, B = 8, A=8 → R =8, G = 8, B = 8, A = (A + x) = 8

   RRRRRRRR GGGGGGGG BBBBBBBB aaaaaaaa→ RRRRRRRR GGGGGGGG BBBBBBBB aaaa**xxxx**

In allen dargelegten Fällen der Klassifizierung steht x für das reservierte Bit für die LSB-Formatierung.

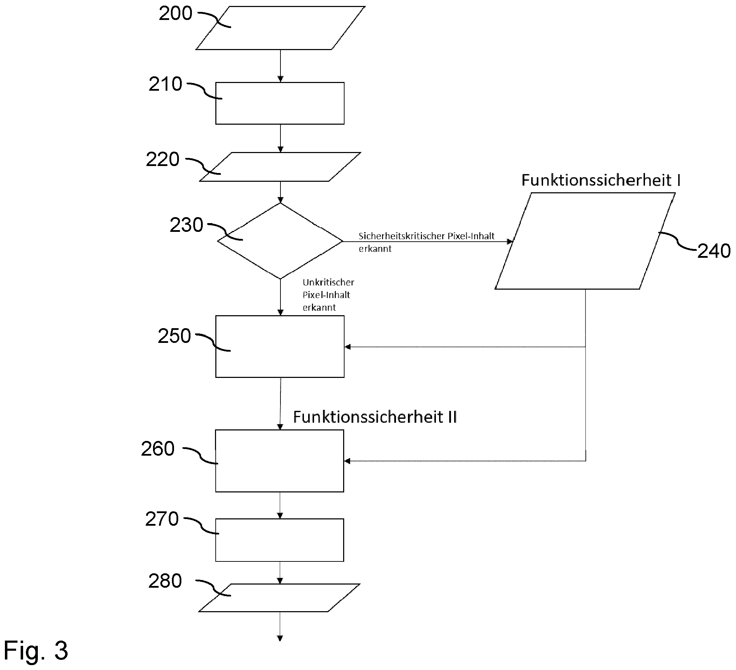

Fig. 3 zeigt ein Ausführungsbeispiel eines Ablaufplans in dem Controller 190 der Empfangseinheit 120. Im Block 200 erfolgt das Einlesen des Gesamtbildes in Form von Matrix-Pixeldaten. Im Block 210 werden die Einzelpixel extrahiert, die im Block 220 in einen Prüfungsvorgang eingelesen werden. Anschließend erfolgt im Block 230 eine Prüfung der einzelnen Pixel dahingehend, um welchen Pixel-Typ es sich handelt. Wird anhand einer klassifizierenden binären Codierung ein sicherheitskritischer Pixelinhalt erkannt, wird zum Block 240 übergegangen, in welchem restriktive Kriterien für eine Pixelmanipulation festgelegt werden. Dies kann beispielsweise ein Schutz vor Veränderungen sein. Anschließend wird zum Block 250 weitergegangen, an welchen auch die Daten von Pixeln weitergeleitet werden, deren unkritischer Inhalt im Block 230 erkannt wurde. In diesem Block 250 erfolgt eine Bildverbesserung der Bilddaten, wenn die geprüften Pixel einen unkritischen Pixel-Inhalt umfassen. Wurde im Block 230 Pixel mit einem sicherheitskritischen Inhalt erkannt, werden die Bilddaten nur begrenzt im Rahmen der zugelassenen restriktiven Kriterien bearbeitet. Vom Block 250 wird zum Block 260 übergegangen, wo eine Prüfung auf Einhaltung der geltenden Prüfkriterien erfolgt, die ebenfalls im Block 240 für die Pixel mit sicherheitskritischem Inhalt festgelegt werden. Im Block 270 wird die Pixelklassifizierung aus den Bilddaten entfernt, die im Block 280 durch die ursprünglichen Einzelpixeldaten ersetzt werden.

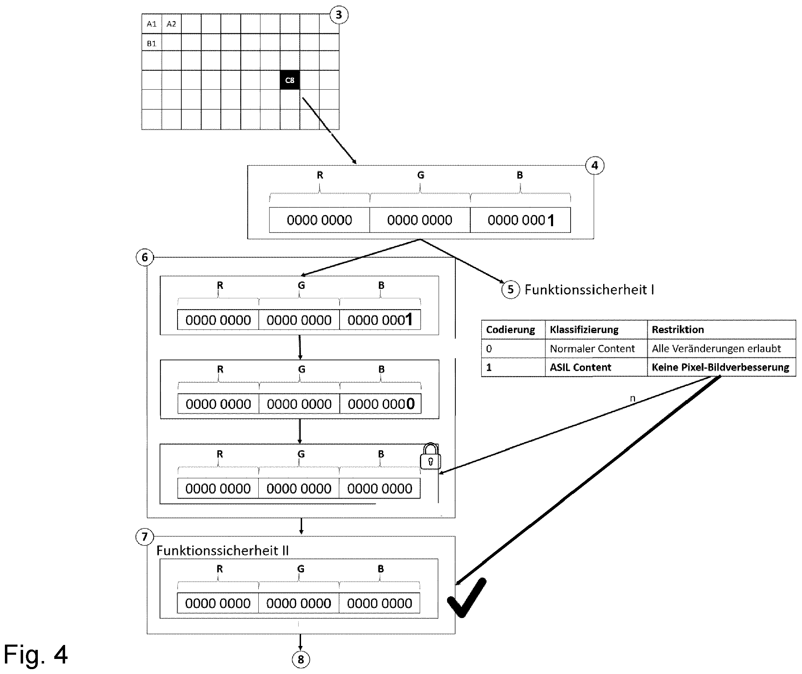

Ein Ausführungsbeispiel zur Bearbeitung von ASIL-klassifizierten Pixeln in der Empfangseinheit 120 ist in Fig. 4 gezeigt. In Funktion 3 erfolgt, wie bereits erläutert, die Übertragung der Bilddaten von der Sendeeinheit 110 in die Empfangseinheit 120, die in der Empfangseinheit 120 in eine Gesamtbild-Pixelmatrix überführt werden. In Funktion 4 erfolgt eine pixelweise Auftrennung des Gesamtbildes. Im Weiteren wird nun beispielsweise das 8te Bit des Blauwerts, (B8) betrachtet, welches als Darstellungsinformation (Farbe 00000000 00000000 00000001) und Metadaten (Klassifizierung 1) umfasst. In der ersten Funktionssicherheitsstufe 5 wird eine Prüfung der Einstufungsklassifizierung des Bits B8 durchgeführt. Das Ergebnis der Auswertung ergibt Klassifizierungsstufe 1 = ASIL-Pixel. In dem Funktionsschritt 6 wird das Klassifizierungsbit durch ein der ursprünglichen Bildinformation zugehöriges zwischengespeichertes Bit ausgetauscht, d.h. in vorliegendem Fall wird das Bit B8 ersetzt, d.h. das Bit wird von 1 auf den Bildwert 0 zurückgesetzt. Weiter wird in Funktion 6 der Bildverbesserungsvorgang zur Bearbeitung der Pixel der Bildinformation RGB nach den geltenden Kriterien in Abhängigkeit der durch die ASIL-Pixelklassifizierung gegebenen Parameter durchgeführt. Danach bedeutet die binäre Codierung 1, dass keine Pixelbildverbesserung des dem Bit B8 zugehörigen Bildes vorgenommen werden darf (erste Funktionssicherheitsstufe 5). In Funktion 7 erfolgt die Überprüfung, ob die in der ersten Funktionssicherheitsstufe 5 vorgegebenen Kriterien der pixelbasierten Modifikation bzw. Optimierung eingehalten wurden. Bei positiven Ergebnis erfolgt in Funktion 8 die Übergabe der Bilddaten in die Treiber für die Visualisierung in der Anzeigeeinheit 130. Bei negativem Ergebnis wird eine Notfallstrategie ergriffen, beispielsweise wird die Funktion des Bildverbesserers abgeschaltet, ein Ersatzwert gebildet oder ein Hinweis über eine Fehlfunktion an einen Fahrzeugnutzer ausgegeben.

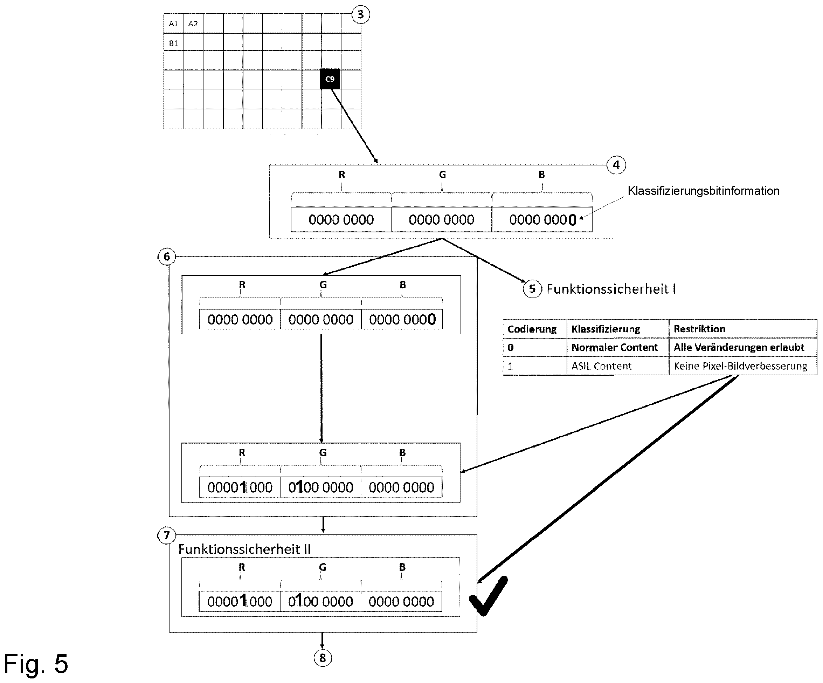

In Fig. 5 ist ein Ausführungsbeispiel zur Bearbeitung von nicht ASIL-klassifizierten Pixeln in der Empfängereinheit 120 dargestellt. Dabei entsprechen die Funktionen 3 und 4 denen, die in Zusammenhang mit Fig. 4 erläutert worden sind. In diesem Fall ist ein Austausch der Klassifizierungsbit gegen ein Farbwertbit des ursprünglichen Bildes nicht erforderlich, da beide den Wert 0 aufweisen. Allerdings umfasst das klassifizierende Bit B8 in diesem Fall als Klassifizierungsbitinformation eine 0, was auf einen sicherheitsunkritischen Inhalt verweist, weshalb Veränderungen des dem Bit B8 zugehörigen Bildes während des Bildverbesserungsvorganges erlaubt sind, was in Funktion 6 auch erfolgt. Auch hier werden mit der Funktion 7 die in der ersten Funktionssicherheitsstufe 5 vorgegebenen Kriterien geprüft. Da das das Pixel B8 umfassende Bild einen unkritischen Inhalt aufweist, liegen keine zusätzlichen Prüfkriterien vor, so dass die Pixelwerte in der in Funktion 6 veränderter, d.h. bildverbesserter Form an die Anzeigeeinheit 130 ausgegeben werden.

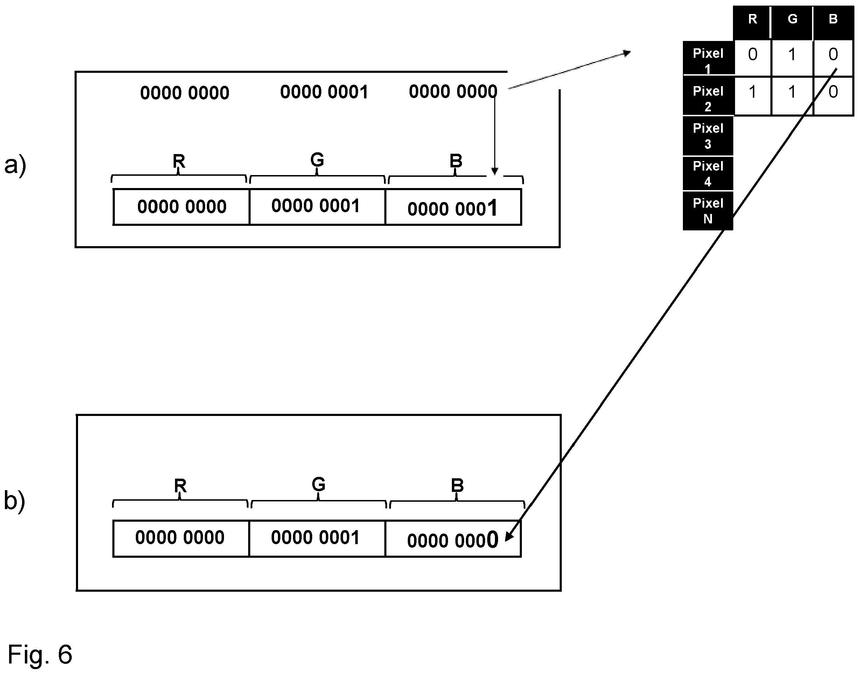

Wie in Fig. 6 näher gezeigt, werden die Metainformationen durch ihre ursprüngliche Farbinformation des letzten bzw. vorhergegangenen Bildes ersetzt, was insbesondere mittels eines Zwischenspeicherns von einer Anzahl von möglich veränderten Farbwert-Bits pro Pixel im Controller 190 erfolgt. In vorliegendem Beispiel wird das Zwischenspeichern anhand des oben unter 3. beschriebenen Pixelformatierungsschemas, bei dem das Klassifizierungsbit abwechselnd in die Bit-Information der RGB-Farbwerte geschrieben wird, erläutert. Im LSB-Bit der Farbe Blau ist das gemäß der Beschreibung zu Fig.2 in der Funktion 2 bzw. im zugehörigen Verfahrensschritt das ASIL-Klassifizierungbit 1 als klassifizierende binäre Codierung eincodiert. Das vor der Eincodierung gültige LSB-Farbwertbit des Ursprungspixels von Blau ist durch einen Pfeil angezeigt mit den Farbwertbits von Rot und Grün zwischengespeichert, siehe 6a. Das Klassifizierungsbit wird zur Definition der ASIL-Relevanz des dem Bit zugehörigen Pixels bzw. Bild entsprechend der Funktion 5 in Fig. 4 ausgelesen. In Funktion 6 wird das Klassifizierungsbit durch das zwischengespeicherte Bit für den Farbwert wieder überschrieben, d.h. das Klassifizierungbit wird wie in Fig. 6b gezeigt durch den Wert 0 ersetzt. Das damit vor der Eincodierung vorhandene Ursprungspixel bzw. das dem Pixel zugehörige Originalbild wird in dem Bildverbesserer entsprechend dem ausgelesenen Klassifizierungsbit behandelt, d.h. in vorliegendem Fall ohne Verbesserung ausgegeben. Dementsprechend wird ein in die Farbe Rot oder Blau eincodiertes Klassifizierungsbits vor Übermittlung an den Bildverbesserer durch die zwischengespeicherten LSB-Bits des Ursprungsbildes ersetzt.

## Patentansprüche

1. Verfahren zur sicheren Anzeige von ASIL-relevanten Daten auf einer Anzeigevorrichtung eines Kraftfahrzeuges umfassend eine Sendeeinheit (110), eine Empfangseinheit (120) und einer Anzeigeeinheit (130) zur Darstellung der von der Empfangseinheit (120) ausgegebenen Bildern,
**dadurch gekennzeichnet, dass**
Bilder mit höheren Sicherheitseinstufungen gegenüber Bildern mit niedrigeren Sicherheitseinstufungen auf der Anzeigeeinheit (130) durch einen Bildverbesserungsvorgang weniger modifiziert dargestellt werden, wobei
eine Information über die Sicherheitseinstufung eines anzuzeigenden Bildes durch eine klassifizierende binäre Codierung in einer Farbbitinformation mindestens eines Pixels des über eine Pixelmatrix anzuzeigenden Bildes mittels der Sendeeinheit (110) in einen Datenstrom eingebracht wird, um eine Veränderung des Bildes während dem Bildverbesserungsvorgang in einem der Bilddaten ausgebenden Empfangseinheit (120) zugehörigen Bildverbesserer (125) für Bilder aller Sicherheitseinstufungen zu steuern.

2. Verfahren nach Anspruch 1,
**dadurch gekennzeichnet, dass**
aus dem von der Bilddaten ausgebenden Empfangseinheit (120) empfangenen Datenstrom die klassifizierende binäre Codierung des mindestens einen Pixels vor einer Übermittlung des das Pixel umfassenden anzuzeigenden Bildes an die Anzeigeeinheit (130) ausgelesen wird, wobei in Abhängigkeit der binären Codierung des mindestens einen Pixels eine Entscheidung über eine Ausführung einer Bildverbesserung getroffen wird.

3. Verfahren nach einem der Ansprüche 1 oder 2,
**dadurch gekennzeichnet, dass**
die ausgelesene binäre Codierung des mindestens einen Pixels durch das ursprünglich vor der binären Codierung in dem Pixel gespeicherten Farbwert-Bit ersetzt wird, wobei das anzuzeigende Bild entsprechend zugehörigen klassifizierenden binärer Codierung im Bildverbesserungsvorgang modifiziert wird.

4. Verfahren nach mindestens einem der vorhergehenden Ansprüche,
**dadurch gekennzeichnet, dass**
die nach dem Bildverbesserungsvorgang ausgegebenen Farbwert-Bits des anzuzeigenden Bildes dahingehend geprüft werden, ob das auszugebende Bild entsprechend der durch die zugehörige binäre Codierung vorgegebene Sicherheitseinstufungen ausgegeben wird.

5. Verfahren nach mindestens einem der vorhergehenden Ansprüche,
**dadurch gekennzeichnet, dass**
für die binäre Codierung in einer vorgegebenen Farbe der RGB-Informationen ein Bit reserviert wird.

6. Verfahren nach mindestens einem der vorhergehenden Ansprüche 1 bis 4,
**dadurch gekennzeichnet, dass**
für die binäre Codierung ein Bit jeder Farbe der RGB-Information reserviert wird.

7. Verfahren nach mindestens einem der vorhergehenden Ansprüche 1 bis 4,
**dadurch gekennzeichnet, dass**
für die binäre Codierung ein Bit einer vorgegebenen Farbe wechselnd in einem jeden Datenframe reserviert wird.

8. Verfahren nach mindestens einem der vorhergehenden Ansprüche 1 bis 4,
**dadurch gekennzeichnet, dass**
für die binäre Codierung zusätzliche LSB-Daten (Least Significant Bit-Daten) in einem Einzelbild mit einer vorgegebenen Farbtiefe bereitgestellt oder Bits in einem ergänzenden Kanal einer Farbkodierung, vorzugsweise einer RGBA- oder RGBW-Kodierung, reserviert werden.

9. Vorrichtung zur sicheren Anzeige von ASIL-relevanten Daten auf einer Anzeigevorrichtung eines Kraftfahrzeuges, umfassend eine Bilddaten erzeugende Sendeeinheit (110) und eine Bilddaten ausgebende Empfangseinheit (120), die über einen Datenstrom kommunizieren sowie eine Anzeigeeinheit (130) zur Darstellung der von der Empfangseinheit (120) ausgegebenen Bildern,
**dadurch gekennzeichnet, dass**
die die Bilddaten erzeugende Sendeeinheit (110) zur Steuerung einer Modifizierung des Bildes dazu eingerichtet ist während eines Bildverbesserungsvorganges in einem der Bilddaten ausgebenden Empfangseinheit (120) zugehörigen Bildverbesserer (125) für Bilder aller Sicherheitseinstufungen eine Zusatzinformation über eine Sicherheitseinstufung der anzuzeigenden Bilddaten als eine klassifizierende binäre Codierung in einem Pixel der Bilddaten einzubringen.

## Claims

1. Method for the secure display of ASIL-relevant data on a display device of a motor vehicle comprising a transmitting unit (110), a receiving unit (120), and a display unit (130) for displaying the images outputted by the receiving unit (120),
**characterized in that**
images with higher security classifications in comparison with images with lower security classifications are represented on the display unit (130) less modified by an image enhancement procedure, wherein
an item of information about the security classification of an image to be displayed by a classifying binary coding in an item of color bit information of at least one pixel of the image to be displayed via a pixel matrix is introduced into a data stream by means of the transmitting unit (110) in order to control, for images of all security classifications, a modification of the image during the image enhancement process in an image enhancer (125) associated with the receiving unit (120) that outputs the image data.

2. Method according to claim 1,
**characterized in that**
the classifying binary coding of the at least one pixel is read out from the data stream received from the receiving unit (120) outputting the image data before the image to be displayed that includes the pixel is transmitted to the display unit (130), a decision as to whether to execute an image enhancement being made as a function of the binary coding of the at least one pixel.

3. Method according to either claim 1 or claim 2,
**characterized in that**
the read-out binary coding of the at least one pixel is replaced by the color value bit originally stored in the pixel prior to the binary coding, the image to be displayed being modified according to associated classifying binary coding in the image enhancement process.

4. Method according to at least one of the preceding claims,
**characterized in that**
the color value bits of the image to be displayed, which are outputted after the image enhancement process, are checked to determine whether the image to be outputted is outputted in accordance with the security classifications specified by the associated binary coding.

5. Method according to at least one of the preceding claims,
**characterized in that**
one bit is reserved for the binary coding in a specified color of the RGB information.

6. The method according to at least one of the preceding claims 1 to 4,
**characterized in that**
one bit of each color of the RGB information is reserved for the binary coding.

7. The method according to at least one of the preceding claims 1 to 4,
**characterized in that**
for the binary coding, one bit of a specified color is reserved in alternating fashion in each data frame.

8. The method according to at least one of the preceding claims 1 to 4,
**characterized in that**
for the binary coding, additional LSB data (Least Significant Bit data) are provided in a frame with a specified color depth, or bits are reserved in a supplementary channel of a color coding, preferably an RGBA or RGBW coding.

9. Device for securely displaying ASIL-relevant data on a display device of a motor vehicle, comprising a transmitting unit (110) that generates image data and a receiving unit (120) that outputs image data, which communicate via a data stream, and a display unit (130) for displaying the images outputted by the receiving unit (120),
**characterized in that**
the transmitting unit (110) generating the image data is adapted to introduce, during an image enhancement process in an image enhancer (125) associated with the receiving unit outputting the image data (120), for images of all security classifications, an item of additional information about a security classification of the image data to be displayed as a classifying binary coding in a pixel of the image data.

## Revendications

1. Procédé permettant l'affichage sécurisé de données relatives à l'ASIL sur un dispositif d'affichage d'un véhicule automobile, comprenant une unité de transmission (110), une unité de réception (120) et une unité d'affichage (130) pour la représentation des images émises par l'unité de réception (120),
**caractérisé en ce que**
des images comportant des classifications de sécurité plus élevées par rapport à des images comportant des classifications de sécurité plus faibles sont représentées de manière moins modifiée sur l'unité d'affichage (130) par un processus d'amélioration d'image, dans lequel
des informations concernant la classification de sécurité d'une image à afficher au moyen d'un codage binaire de classification dans des informations de bit de couleur d'au moins un pixel de l'image à afficher par l'intermédiaire d'une matrice de pixels sont introduites dans un flux de données au moyen de l'unité de transmission (110) afin de commander une modification de l'image pendant le processus d'amélioration d'image dans un appareil d'amélioration d'image (125), associé à l'unité de réception (120) émettant les données d'image, pour des images de toutes les catégories de sécurité.

2. Procédé selon la revendication 1,
**caractérisé en ce que**
à partir du flux de données reçu par l'unité de réception (120) émettant les données d'image, le codage binaire de classification de l'au moins un pixel est lu avant une communication à l'unité d'affichage (130) de l'image à afficher comprenant le pixel, dans lequel, en fonction du codage binaire de l'au moins un pixel, une décision est prise quant à l'exécution d'une amélioration d'image.

3. Procédé selon l'une des revendications 1 ou 2,
**caractérisé en ce que**
le codage binaire lu de l'au moins un pixel est remplacé par le bit de valeur de couleur initialement stocké dans le pixel avant le codage binaire, dans lequel l'image à afficher est modifiée conformément à un codage binaire de classification associé dans le processus d'amélioration d'image.

4. Procédé selon au moins l'une des revendications précédentes,
**caractérisé en ce que**
les bits de valeur de couleur de l'image à afficher, émis après le processus d'amélioration d'image, sont vérifiés afin de s'assurer que l'image à émettre est émise conformément aux classifications de sécurité prédéfinies par le codage binaire associé.

5. Procédé selon au moins l'une des revendications précédentes,
**caractérisé en ce que**
pour le codage binaire, un bit est réservé dans une couleur prédéfinie des informations RVB.

6. Procédé selon au moins l'une des revendications précédentes 1 à 4,
**caractérisé en ce que**
pour le codage binaire, un bit de chaque couleur des informations RVB est réservé.

7. Procédé selon au moins l'une des revendications précédentes 1 à 4,
**caractérisé en ce que**
pour le codage binaire, un bit d'une couleur prédéfinie est réservé alternativement dans chaque trame de données.

8. Procédé selon au moins l'une des revendications précédentes 1 à 4,
**caractérisé en ce que**
pour le codage binaire, des données LSB (données de Least Significant Bit, bit de poids faible) supplémentaires sont fournies dans une image unique comportant une profondeur de couleur prédéfinie ou des bits sont réservés dans un canal supplémentaire d'un codage couleur, de préférence d'un codage RVBA ou RVBB.

9. Dispositif permettant l'affichage sécurisé de données relatives à l'ASIL sur un dispositif d'affichage d'un véhicule automobile, comprenant une unité de transmission (110) générant des données d'image et une unité de réception (120) émettant des données d'image, lesquelles communiquent par l'intermédiaire d'un flux de données, ainsi qu'une unité d'affichage (130) pour la représentation des images émises par l'unité de réception (120),
**caractérisé en ce que**
pour la commande d'une modification de l'image, l'unité de transmission (110) générant les données d'image est configurée pour introduire des informations supplémentaires concernant une classification de sécurité des données d'image à afficher en tant que codage binaire de classification dans un pixel des données d'image pendant un processus d'amélioration d'image dans un appareil d'amélioration d'image (125), associé à l'unité de réception (120) émettant les données d'image, pour des images de toutes les catégories de sécurité.
